# EUROPEAN PATENT APPLICATION

(11) **EP 2 703 086 A1**
(43) Date of publication of application: **05.03.2014**
(21) Application number: 12460062.8
(22) Date of filing: 12.09.2012
(51) Int. Cl.: B03B 5/02, B03B 11/00, B29B 17/02, B08B 3/10

(54) **Hydro-mixer for washing foil flakes**

(30) Priority: 29.08.2012 PL 40055212
(71) Applicant: Polimer Polska Sp. z.o.o., 09-411 Stara Biala (PL)
(72) Inventor: Skonieczny, Jakub, 09-413 Sikórz (PL)

(57) **Abstract**

The hydro-mixer has a step body (1), with an inlet nozzle (2) in the upper, cylindrical part, and with an outlet nozzle (3) on the opposite side. The lower edge of the inlet nozzle (2) is situated over the lower edge of the outlet nozzle (3). The lower part (4) of the body (1) has the shape of a step cone which is truncated and closed with the upper knife gate valve (5) linked by means of a pipe (6) with the lower knife gate valve (7). On top of the body (1) there is a motor (8), attached eccentrically, with a rotational speed governor (9), and a mixing paddle (10) is attached coaxially to the driving motor shaft (8). The inlet nozzle (2) is attached to the body (1) at the angle (α) within the range from 70º to 85º, whereas the outlet nozzle (3) is attached to the body (1) at the angle (β) within the range from 91º to 100º. The mixing paddle (10) is equipped with semicircular blades (12) with the angle of attack η from 15º to 25º, which are in contact with each other on a shaft of the mixing paddle (10) in a spiral line.

## Description

The present invention relates to the hydro-mixer, a device especially for mixing, washing, separating and centrifuging foil waste generated during production of regranulate in processes of recycling plastics.

The way of and the centrifuge for continuous draining of particulates are known from the Polish patent specification No. 86 186. The centrifuge is equipped with a sieve, placed inside a rotating drum, to which a drained substance is supplied. The drum is in a sealed space which is connected to the source of gas with high density in operating conditions, and to a sluice intended for removing particulates from the sealed space, and a ring chamber which surrounds the drum is also connected to the source of high density gas.

The fact that the device has a step body with an inlet nozzle in the upper, cylindrical part and with an outlet nozzle on the opposite side, is the essence of the invention. The lower part of the body has the shape of a step cone which is truncated and closed with an upper knife gate valve linked by means of a pipe with a lower knife gate valve. On top of the body there is a motor with a rotational speed governor, and a mixing paddle is attached coaxially to the driving motor shaft. The lower edge of the inlet nozzle is situated over the lower edge of the outlet nozzle. The inlet nozzle is equipped with a water connection and an intake opening for foil flakes of plastic. The inlet nozzle is attached to the body at the angle α within the range from 700 to 850, favourably from 770 to 810, whereas the outlet nozzle is attached to the body at the angle within the range from 910 to 1000, favourably from 940 to 960. The driving motor is an electric induction motor, and an inverter or a hydraulic motor equipped with a rotational speed governor is a regulator of rotational speed, with the reservation that adjustment of rotational speed is smooth. The axis of the driving motor shaft is situated eccentrically in relation to the axis of the body. The mixing paddle is equipped with semicircular blades with the angle of attack η from 150 to 250, favourably 180, which are in contact with each other on the shaft of the mixing paddle in a spiral line. The relation of height of a column of the medium in the body to immersion depth of the mixing paddle is from 1.3 to 1.85; favourably 1.56, whereas the relation of the surface of a medium table in the body to the total surface of the semicircular blades is from 30 to 60, favourably 46.

Unexpectedly, it turned out that continuous operation of the hydro-mixer was possible thanks to engineers who had set up inclination angles α of the inlet nozzle and β of the outlet nozzle, with the lower edge of the inlet nozzle situated over the lower edge of the outlet nozzle. An unexpected inventive effect was also obtained through proper adaptation of rotational speed of the driving motor as well as the shape and attack angle of the mixing paddle's blades so that the impact of the blades results in the separation of flakes, preventing them from getting stuck together. Continuous operation of the hydro-mixer is possible thanks to cyclical and alternate operation of the knife gate valves. When the upper valve is open and the lower valve is closed, falling impurities contained in a recycled medium accumulate over the lower valve. When the upper knife gate valve is closing, the lower knife gate valve is opening. This enables discharge of deposited impurities.

In addition, the innovative solution makes it possible to remove impurities from plastics very carefully i.e. to obtain a level of purity that is equal even to 100%. The inventive hydro-mixer combines high production capacity with low electrical power consumption. A closed structure makes it possible to prevent smell from being released outside. Service costs of the device are minimal thanks to a continuous, automatic operating mode and thanks to the lack of wear parts such as e.g. filter cloths, sieves etc.

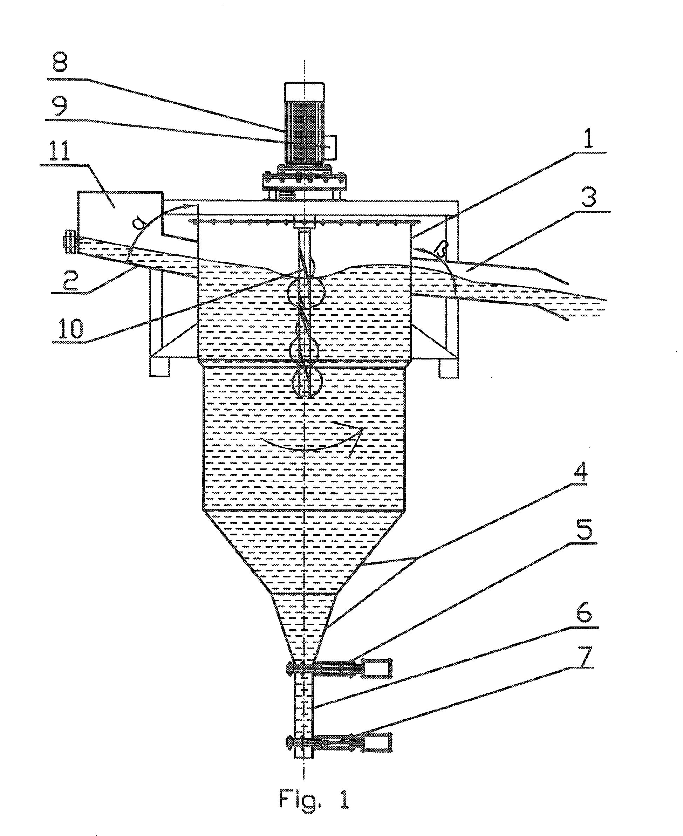

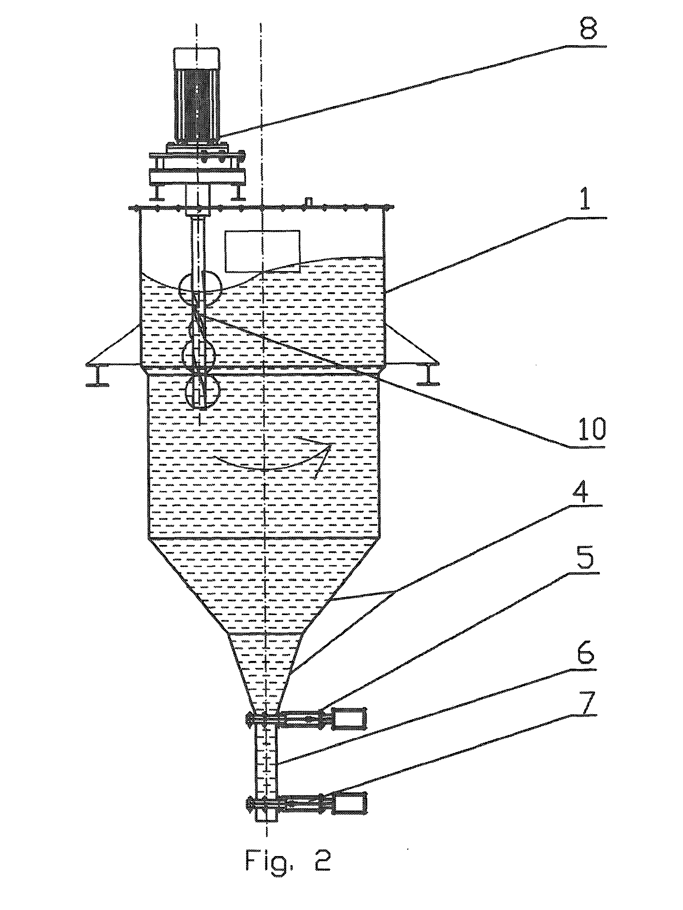

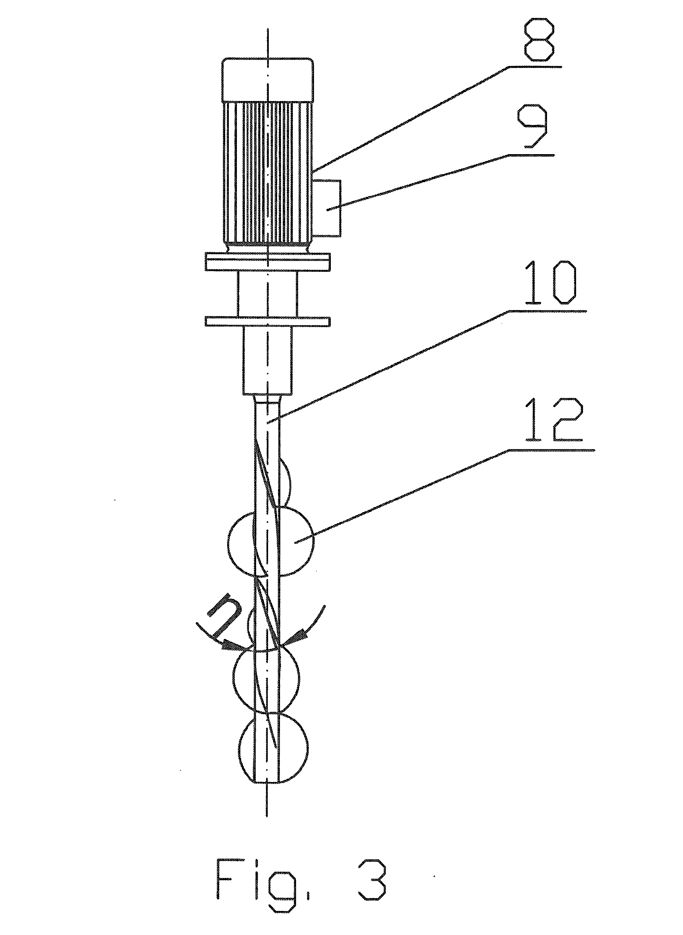

The subject of the invention is exemplified in Figure 1 which presents the hydro-mixer with a symbolically marked medium, in Figure 2 which shows the hydro-mixer turned through 90° in relation to Fig. 1, and in Figure 3 which presents the driving motor with the mixing paddle.

The inventive hydro-mixer has a step body 1, with an inlet nozzle 2 in the upper, cylindrical part, and with an outlet nozzle 3 on the opposite side. The lower part 4 of the body 1 has the shape of a step cone which is truncated and closed with the upper knife gate valve 5 linked by means of a pipe 6 with the lower knife gate valve 7. On top of the body 1 there is a motor 8 with a rotational speed governor 9, and a mixing paddle 10 is attached coaxially to the driving motor shaft 8.

The lower edge of the inlet nozzle 2 is situated over the lower edge of the outlet nozzle 3. The inlet nozzle 2 is equipped with a water connection and an intake opening 11 for foil flakes of plastic. The inlet nozzle 2 is attached to the body 1 at the angle α within the range from 70° to 85°, favourably from 77° to 81°, whereas the outlet nozzle 3 is attached to the body 1 at the angle β within the range from 91° to 100°, favourably from 94° to 96°. The driving motor 8 is an electric induction motor, and an inverter or a hydraulic motor equipped with a rotational speed governor 9 is a regulator of rotational speed 9, with the reservation that adjustment of rotational speed is smooth. The axis of the driving motor shaft 8 is situated eccentrically in relation to the axis of the body 1. The mixing paddle 10 is equipped with semicircular blades 12 with the angle of attack η from 15° to 25°, favourably 18°, which are in contact with each other on the shaft of the mixing paddle 10 in a spiral line. The relation of height of a column of a medium in the body 1 to immersion depth of the mixing paddle 10 is from 1.3 to 1.85; favourably 1.56, whereas the relation of the surface of a medium table in the body 1 to the total surface of the semicircular blades 12 is from 30 to 60, favourably 46.

## Claims

1. The hydro-mixer for continuous washing of foil flakes with a vertical axis body and with a rotating mixing paddle inside, **characterized in that** it has a step body (1) with an inlet nozzle (2) in the upper, cylindrical part and with an outlet nozzle (3) on the opposite side, with the reservation that the lower part (4) of the body (1) has the shape of a step cone which is truncated and closed with the upper knife gate valve (5) linked by means of a pipe (6) with the lower knife gate valve (7), and on top of the body (1) there is a motor (8) with a rotational speed governor (9), and a mixing paddle (10) is attached coaxially to the driving motor shaft (8).

2. The hydro-mixer according to claim 1, **characterized in that** the lower edge of the inlet nozzle (2) is situated over the lower edge of the outlet nozzle (3).

3. The hydro-mixer according to claim 1, **characterized in that** the inlet nozzle (2) is equipped with a water connection and an intake opening (11) for foil flakes of plastic.

4. The hydro-mixer according to claim 1 or 3, **characterized in that** the inlet nozzle (2) is attached to the body (1) at the angle (α) within the range from 70° to 85°, favourably from 77° to 81°.

5. The hydro-mixer according to claim 1, **characterized in that** the outlet nozzle (3) is attached to the body (1) at the angle (β) within the range from 91° to 100°, favourably from 94° to 96°.

6. The hydro-mixer according to claim 1, **characterized in that** the driving motor (8) is an electric induction motor, and an inverter is a rotational speed governor (9).

7. The hydro-mixer according to claim 1, **characterized in that** the driving motor (8) is a hydraulic motor equipped with a rotational speed governor (9).

8. The hydro-mixer according to claim 1 or 6 or 7, **characterized in that** adjustment of rotational speed is smooth.

9. The hydro-mixer according to claim 1, **characterized in that** the axis of the driving motor shaft (8) is situated eccentrically in relation to the axis of the body (1).

10. The hydro-mixer according to claim 1, **characterized in that** the mixing paddle (10) is equipped with semicircular blades (12) with the angle of attack η from 15° to 25°, favourably 18°, which are in contact with each other on the shaft of the mixing paddle (10) in a spiral line.

11. The hydro-mixer according to claim 1 or 10, **characterized in that** the relation of height of a column of the medium in the body (1) to immersion depth of the mixing paddle (10) is from 1.3 to 1.85; favourably 1.56.

12. The hydro-mixer according to claim 1 or 10, **characterized in that** the relation of the surface of a medium table in the body (1) to the total surface of the semicircular blades (12) is from 30 to 60, favourably 46.
